# EUROPÄISCHE PATENTSCHRIFT

(11) **EP 3 729 293 B1**
(45) Veröffentlichungstag und Bekanntmachung des Hinweises auf die Patenterteilung: **19.03.2025**
(21) Anmeldenummer: 18830797.9
(22) Anmeldetag: 19.12.2018
(51) Int. Cl.: G06F 16/2455, G06F 16/901

(54) **VERFAHREN ZUR REDUZIERUNG DER RECHENZEIT EINER DATENVERARBEITUNGSEINRICHTUNG**
METHOD FOR REDUCING THE COMPUTING TIME OF A DATA PROCESSING UNIT
PROCÉDÉ DE RÉDUCTION DU TEMPS DE CALCUL D'UN DISPOSITIF DE TRAITEMENT DES DONNÉES

(30) Priorität: 22.12.2017 DE 102017131142; 24.10.2018 DE 102018126546
(43) Veröffentlichungstag der Anmeldung: 28.10.2020
(73) Patentinhaber: Odass Gbr, 20459 Hamburg (DE)
(72) Erfinder: JANSEN, Daniel, 26188 Friedrichsfehn (DE)
(74) Vertreter: Jabbusch, Matthias
(86) Internationale Anmeldenummer: PCT/EP2018/085803
(87) Internationale Veröffentlichungsnummer: WO 2019/121890

(56) Entgegenhaltungen:
- US-A1- 2010 269 147
- US-A1- 2010 281 067
- US-A1- 2011 307 447
- ANONYMOUS: "Datenbereinigung", 14 November 2017 (2017-11-14), pages 1 - 2, XP093076808, Retrieved from the Internet <URL:https://de.wikipedia.org/w/index.php?title=Datenbereinigung&oldid=170995640> [retrieved on 20230829]

## Beschreibung

Die Erfindung betrifft ein Verfahren zur Reduzierung der Rechenzeit einer Datenverarbeitungseinrichtung bei der Verarbeitung von Daten, insbesondere von Daten eines Datenstroms, wobei ein aus Datenstromelementen bestehender Eingangsdatenstrom sequenziell von mindestens einer Datenverarbeitungseinrichtung erfasst wird, wobei aus dem Eingangsdatenstrom mindestens ein elementaradressierbarer Datenstrom erzeugt wird.

Bekannt sind Verfahren zur Verarbeitung von Daten auf Datenverarbeitungseinrichtungen, wie beispielsweise Computern oder ähnlichen Recheneinheiten zur Bearbeitung von elektronischen Daten, bei denen aus Datenstromelementen aufgebaute Datenströme sequenziell von der Datenverarbeitungseinrichtung erfasst werden. Hierbei können die Datenstromelemente unterschiedliche Längen aufweisen. Die übertragenen Daten können sich hierbei oft wiederholen. Aufgrund der variablen Längen der Datenstromelemente können die Datenströme nur verarbeitet werden, wenn der Datenstrom vollständig sequenziell durch die Datenverarbeitungseinrichtung gelesen wird. Insbesondere muss zur Analyse einzelner Datenstromelemente die Analyse auf jedes gelesene Datenstromelement angewendet werden. Hierdurch sind ein erheblicher Aufwand an Rechenzeit und ein hoher Bedarf an Speicherplatz gegeben.

Beispielsweise ist in der US 2010/0269147 A1 ein Verfahren zur Erstellung und Benutzung von Index-Informationen für Videoinhalte beschrieben. Als weiteres Beispiel wird in der US2011/307447A1 A1 eine Deduplizierung von Elementen eines Eingangsdatenstroms in einen Ausgangsdatenstrom durchgeführt.

Der Erfindung liegt die Aufgabe zugrunde, ein Verfahren zur Verarbeitung von Daten eines Datenstromes vorzuschlagen, durch das eine Reduzierung der Rechenzeit einer Datenverarbeitungseinrichtung bei der Datenverarbeitung gegeben ist.

Die Lösung dieser Aufgabe erfolgt mit einem Verfahren mit den Merkmalen des Patentanspruchs 1. Weiterbildungen und vorteilhafte Ausgestaltungen sind in den Unteransprüchen angegeben.

Ein Eingangsdatenstrom, beispielsweise ein Sensordatenstrom oder ein Datenstrom der log-files eines Webservers oder Ähnliches enthält, wird mit einer Datenverarbeitungseinrichtung, beispielsweise von einem Prozessorkern oder Ähnlichem, sequenziell erfasst. Der Datenstrom kann hierbei aus Datenstromelementen, beispielsweise einzelnen log-file-Einträge, aufgebaut sein. Die Datenstromelemente, also beispielsweise log-file-Einträge, können wiederum Elementanteile, wie beispielsweise einen Zeitstempel, URL Adresse, die Bezeichnung einer angeforderten Website oder Datei, einen HTTP Antwortcode, eine übermittelte Dateigröße, eine verlinkende Website, Beschreibungen zum Browser, mit dem die Website besucht wird, und weitere Einträge enthalten. Aufgrund der variablen Länge der Datenstromelemente, ist eine Verarbeitung einzelner Datenstromelemente in dem Datenstrom nur ermöglicht, wenn die Verarbeitung sequenziell auf die eingehenden Datenstromelemente des Datenstromes angewendet wird. Um den Zugriff auf einzelne Datenstromelemente zu ermöglichen, also um eine Elementadressierbarkeit des Datenstromes herzustellen, wird zu dem sequenziell gelesenen Eingangsdatenstrom mindestens ein elementadressierbarer Datenstrom erzeugt. Zunächst wird jedes Datenstromelement des Eingangsdatenstromes in Elementanteile aufgeteilt. Beispielsweise können log-file-Einträge als Datenstromelemente in ihre verschiedenen Elementanteile aufgeteilt werden.

Die Elementanteile können nun nach unterschiedlichen Kategorien zu Anteilgruppen gruppiert werden. Bei den Anteilgruppen kann es sich beispielsweise beim Beispiel der log-file-Einträge um eine Request-Gruppe, eine Page-Gruppe, eine Zeitcode-Gruppe, eine Referenz-Gruppe und weitere Gruppen handeln. Beispielsweise kann in der Request-Gruppe die Bezeichnung des Host und des Browsers, mit dem auf eine Webseite zugegriffen wird, beschrieben sein. Hierbei kann beispielsweise als bekannt voraus gesetzt werden, dass von einem bestimmten Host, also von einer bestimmten IP-Adresse, üblicherweise mit demselben Browser auf eine Website zugegriffen wird. Die Elementanteile, die in einer Anteilgruppe zusammen gefasst werden, können beispielsweise ähnliche, insbesondere gleiche Änderungsfrequenz aufweisen, sich also gleich häufig in den Datenstromelementen untereinander ändern bzw. wiederholen. Weiterhin kann es möglich sein, dass einer Anteilgruppe nur ein einzelner Elementanteil zugeordnet wird und die Anteilgruppe somit aus nur einem Elementanteil besteht. Zumindest eine Anteilgruppe bzw. der Wert der Anteilgruppe wird mit bereits erfassten Anteilgruppen auf Übereinstimmung geprüft. Bei dem Wert einer Anteilgruppe kann es sich beispielsweise um den Browsernamen und die IP-Adresse handeln. Aus den Anteilgruppen, die mit bereits erfassten Anteilgruppen nicht übereinstimmen, die also beispielsweise einen neuen Inhalt gegenüber den bereits erfassten Anteilgruppen aufweisen, wird ein elementadressierbarer Nebendatenstrom zu dem erfassten Eingangsdatenstrom erzeugt. Durch die Elementadressierbarkeit des Nebendatenstromes ist die Position einer Anteilgruppe in dem Nebendatenstrom berechenbar. Beispielsweise können die Datenstromelemente des Nebendatenstromes hierzu untereinander die gleiche Länge aufweisen oder es wird ein zusätzlicher Indexdatenstrom zu dem Nebendatenstrom erzeugt. Die Datenstromelemente, also die Indexdaten, des Indexdatenstromes weisen hierbei untereinander die gleiche Länge, also die gleiche Anzahl an Elementanteilen, auf und in einem Indexdatum ist die Anzahl der in dem Datenstrom vor dem zugeordneten Datenstromelement ausgegebenen Elementanteile enthalten. Über die Zuordnung des Indexdatenstromes ist die Elementadressierbarkeit des Datenstromes gegeben. Die Anteilgruppe ist über ihre in den Nebendatenstrom verweisende Adresse definiert. Es wird ein Ausgabedatenstrom erzeugt, in dem zumindest eine Elementadresse einer Anteilgruppe in dem Nebendatenstrom enthalten ist. Hierbei entspricht die Abfolge der Datenstromelemente des Ausgabedatenstroms der Abfolge der Datenstromelemente des Eingangsdatenstromes. Durch die Erzeugung eines elementadressierbaren Datenstromes zu dem Nebendatenstrom ist ein direkter Zugriff auf einzelne Datenstromelemente bzw. Anteilgruppen, beispielsweise zur Weiterverarbeitung, gegeben, ohne dass der gesamte Datenstrom sequenziell gelesen werden muss. Hierdurch ist eine erhebliche Reduzierung der Rechenzeit der Datenverarbeitungseinrichtung gegeben. Zudem ist eine Reduzierung des benötigten Speicherplatzes durch Prüfung auf Übereinstimmung der Datenstromelemente mit bereits erfassten Anteilgruppen gegeben, da wiederholt auftretende Anteilgruppen bzw. deren Werte nur einfach gespeichert werden.

**In** einer Weiterbildung des Verfahrens handelt es sich bei den Kategorien um unterschiedliche Änderungsfrequenzen und/oder Wiederholungsfrequenzen und/oder Datenkategorien der Elementanteile. Die Elementanteile können nach unterschiedlichen Kategorien, beispielsweise nach ihren Änderungsfrequenzen, also nach ihrer Änderungshäufigkeit in den Datenstromelementen des erfassten Datenstromes, in verschiedene Anteilgruppen gruppiert werden. Die Änderungsfrequenz kann beispielsweise die Häufigkeit beschreiben, mit der sich ein Elementanteil in Bezug auf die eingegebenen Datenstromelemente ändert.

In einer Weiterbildung des Verfahrens ist bei elementadressierbaren Datenströmen eine Elementadresse durch die Anzahl der in dem Datenstrom vor dem adressierten Datenstromelement ausgegebenen Elementanteile definiert. Eine Elementadresse, also die Adresse eines Datenstromelementes in einem Datenstrom, ist durch die Anzahl der vor dem Datenstromelement ausgegebenen Elementanteile des erfassten Datenstromes definiert. Durch die bekannte Anzahl der vor dem aufzurufenden Datenstromelement, also dem adressierten Datenstromelement, in dem erfassten Datenstrom ausgegebenen Elementanteilen und deren bekannte Länge ist ein direkter Zugriff auf das adressierte Datenstromelement ermöglicht. Somit ist kein sequenzielles Lesen des vollständigen Datenstromes bis zum Auffinden des aufzurufenden Datenstromelementes notwendig, wodurch eine erhebliche Zeitersparnis beim Aufrufen und Verarbeiten von einzelnen Datenstromelementen gegeben ist.

In einer Weiterbildung des Verfahrens wird einem mindestens zwei Datenstromelementen unterschiedlicher Länge aufweisenden Datenstrom, wobei ein Datenstromelement als Abfolge von Elementanteilen gleicher Länge angesehen wird, ein Indexdatenstrom zugeordnet, wobei die Indexdaten des Indexdatenstromes untereinander die gleiche Länge aufweisen, wobei in einem Indexdatum die Anzahl der in dem Datenstrom vor dem zugeordneten Datenstromelement ausgegebenen Elementanteile enthalten ist, wobei die Reihenfolge der Indexdaten der Reihenfolge der zugewiesenen Datenstromelemente im Datenstrom entspricht und wobei über die Zuordnung des Indexdatenstromes die Elementadressierung des Datenstroms gegeben ist. Eine Elementadressierbarkeit eines Datenstromes kann dadurch gegeben sein, dass alle Datenstromelemente des Datenstromes die gleiche Länge aufweisen, das heißt die Datenstromelemente weisen die gleiche Anzahl an Elementanteilen auf, wobei die Elementanteile untereinander die gleiche Länge aufweisen. Hierdurch kann die Position eines Datenstromelementes bzw. einer Anteilgruppe in der Abfolge der Datenstromelemente in dem Datenstrom durch ein entsprechendes Vielfaches der Länge der Datenstromelemente berechnet werden. So kann beispielsweise die Position des n-ten Datenstromelementes in dem Datenstrom durch das n-fache der Länge eines Datenstromelementes berechnet werden. Oft weisen Datenströme Datenstromelemente unterschiedlicher Länge, also unterschiedlich viele Elementanteile, auf. Ein Datenstromelement kann hierbei als Abfolge von Elementanteilen gleicher Länge angesehen werden. Um eine Adressierbarkeit eines Datenstromes mit unterschiedlich langen Datenstromelementen zu gewährleisten, wird dem Datenstrom ein Indexdatenstrom zugeordnet. Ein Indexdatenstrom ist durch eine Abfolge von Indexdaten ausgebildet, wobei die Indexdaten untereinander die gleiche bekannte Länge aufweisen. Jedem Datenstromelement bzw. jeder aus Elementanteilen zusammengesetzten Anteilgruppe wird ein Indexdatum zugeordnet. In dem einem Datenstromelement zugeordneten Indexdatum ist die Anzahl der Elementanteile hinterlegt, die in dem Datenstrom vor dem, dem Indexdatum zugeordneten Datenstromelement liegen. Die Reihenfolge der Indexdaten entspricht der Reihenfolge der zugewiesenen Datenstromelemente im Datenstrom. Über die Zuordnung des Indexdatenstromes ist die Elementadressierbarkeit des Datenstromes gegeben, da die Position eines einem aufzurufenden Datenstromanteils zugeordneten Indexdatums in dem Indexdatenstrom berechenbar ist, da die Indexdaten untereinander die gleiche Länge aufweisen. In dem Indexdatum ist die Anzahl der Elementanteile, die in dem Datenstrom vor dem aufzurufenden Datenstromelement ausgegeben sind, hinterlegt, so dass die Position des aufzurufenden Datenstromelementes in dem Datenstrom bekannt ist. Insbesondere kann ein Indexdatenstrom einem Nebendatenstrom eines Eingangsdatenstromes zugeordnet werden. In dem Nebendatenstrom sind nur nicht bereits erfasste Datenstromelemente des Eingangsdatenstromes erhalten. Jeden Datenstromelementen des Nebendatenstromes wird jeweils ein Indexdatum zugeordnet. In den Indexdaten ist die Anzahl an Elementanteilen die in dem Nebendatenstrom vor dem aufzurufenden Datenstromelement des Nebendatenstromes liegen, hinterlegt. Dadurch, dass der Indexdatenstrom Indexdaten gleicher Länge aufweist, ist die jeweilige Position eines jeden Indexdatums berechenbar. In einem Ausgabedatenstrom können die Adressen der Anteilgruppen in dem Nebendatenstrom dadurch enthalten sein, dass die Position der jeweiligen, den Anteilgruppen zugeordneten Indexdaten in dem Indexdatenstrom, ausgegeben werden. Somit kann das einer Anteilgruppe zugeordnete Indexdatum aufgerufen werden, wobei in dem aufgerufenen Indexdatum die Elementadresse der Anteilgruppe in dem Nebendatenstrom angegeben ist.

In einer Weiterbildung des Verfahrens ist die maximal verfügbare Anzahl an Datenstromelementen eines Datenstromes durch ein Datenintervall des Datenstromes vorgegeben und innerhalb eines Datenintervalls angeordnete adressierbare Datenstromelemente eines Datenstromes verweisen auf innerhalb eines Datenintervalls angeordnete Datenstromelemente des adressierten Datenstromes. Die maximale, zu einem Zeitpunkt verfügbare Anzahl an Datenstromelementen eines Datenstromes ist durch ein Datenintervall des Datenstromes vorgegeben. Durch ein Datenintervall ist somit ein Datenfenster ausgebildet. Ein Datenintervall kann beispielsweise durch einen Ringpuffer ausgebildet sein. Außerhalb des Datenfensters liegende Datenstromelemente bzw. aus den Elementanteilen der Datenstromelemente gebildete Anteilgruppen werden bei der Wiedererkennungsprüfung, also bei der Prüfung, ob eine Anteilgruppe, bzw. der Wert der Anteilgruppe, bereits erfasst wurde oder nicht, als neu erkannt. Innerhalb eines Datenfensters in einem Datenstrom angeordnete adressierbare Datenstromelemente verweisen auf innerhalb eines Datenintervalls angeordnete Datenstromelemente des adressierten Datenstromes. Die aufeinander verweisenden Datenstromelemente weisen somit eine räumliche Nähe, beispielsweise innerhalb einer Speichereinrichtung auf, so dass ein schneller Verweis von einem adressierenden Datenstromelement auf das adressierte Datenstromelement gegeben ist. Insbesondere können die aufeinander verweisenden Datenstromelemente in einem Cache erfasst sein.

In einer Weiterbildung des Verfahrens wird zu einem Datenstrom ein weiterer Datenstrom mit gleicher Anzahl und Reihenfolge der Datenstromelement erzeugt, wobei der weitere Datenstrom gegenüber dem ursprünglichen Datenstrom veränderte, von den Datenstromelementen des ursprünglichen Datenstrom abhängige Datenstromelemente aufweist, wobei die Datenstromelemente des weiteren Datenstromes über die gleichen Elementadressen wie die entsprechenden Datenstromelemente des ursprünglichen Datenstroms adressierbar sind. Beispielsweise kann ein Nebendatenstrom erzeugt werden, der nur noch nicht erfasste Anteilgruppen eines Datenstromes enthält. Beispielsweise können die Anteilgruppen bzw. die Elementanteile weiter zerlegt werden oder zu neuen Gruppen zusammengefasst werden. Zu einem Nebendatenstrom kann ein weiterer Datenstrom erzeugt werden, wobei der weitere Datenstrom die gleiche Anzahl und die gleiche Reihenfolge an Datenstromelementen aufweist. Die Datenstromelemente des weiteren Datenstromes hängen von den Datenstromelementen des Nebendatenstromes ab, in dem die Datenstromelemente des weiteren Datenstromes beispielsweise durch weitere Zerlegung oder neue Gruppierung aus den Datenstromelementen des Nebendatenstromes hervorgehen. Die Datenstromelemente des weiteren Datenstromes sind hierbei über die gleichen Elementadressen wie die entsprechenden Datenstromelemente des ursprünglichen Datenstromes adressierbar, da die Anzahl und die Reihenfolge der Datenstromelemente erhalten bleibt.

In einer Weiterbildung des Verfahrens verweist durch den Erhalt der Abfolge der Datenstromelemente des Eingangsdatenstromes in dem Ausgabestrom der in den ursprünglichen Eingangsdatenstrom adressierende Datenstrom auch bei rekursiver Anwendung des Verfahrens auf die zugehörigen Datenstromelemente des Ausgabedatenstromes. Die Abfolge der Datenstromelemente des Eingangsdatenstromes bleibt in dem Ausgabedatenstrom erhalten. Der in den ursprünglichen Eingangsdatenstrom adressierende Datenstrom verweist somit auch bei wiederholter, also rekursiv verschachtelter Anwendung des Verfahrens auf die zugehörigen Datenstromelemente des Ausgabedatenstroms. Eine wiederholte Anwendung des Verfahrens auf die Nebendatenströme ist somit ermöglicht. Insbesondere kann eine rekursive Durchführung des Verfahrens auch zu einem späteren Zeitpunkt oder auch mittels einer weiteren Datenverarbeitungseinrichtung erfolgen.

In einer Weiterbildung des Verfahrens werden die Datenströme in voneinander unabhängigen Blöcken weiterverarbeitet und die Weiterverarbeitung erfolgt sowohl räumlich als auch zeitlich getrennt. Die Weiterverarbeitung, beispielsweise der Nebendatenströme, insbesondere eine Neugruppierung in weitere Anteilgruppen oder die weitere Zerlegung von Elementanteilen, kann sowohl zeitlich als auch räumlich getrennt, also beispielsweise zu einem späteren Zeitpunkt als die erste Durchführung des Verfahrens und mittels einer weiteren Datenverarbeitungseinrichtung erfolgen.

In einer Weiterbildung des Verfahrens wird zur Übereinstimmungsprüfung einer Anteilgruppe mindestens eine Abbildung, insbesondere ein Hashwert zugeordnet, dieser Hashwert ist ein aus der Anteilgruppe berechneter nummerischer Hashwert, zu gleichen Anteilgruppen werden gleiche Hashwerte berechnet, ein zusammenhängender Speicherbereich wird als Abfolge aus Speicherplätzen zur Speicherung von Elementadressen vorgehalten, wobei jeder Speicherplatz eine Elementadresse enthalten kann oder als nicht belegt markiert ist, einer Anteilgruppe wird über den Hashwert ein Speicherplatz zugeordnet, bei einem als nicht belegt markierten Speicherplatz wird die Anteilgruppe als unerkannt angesehen und in dem zugeordneten Nebenstrom ausgegeben, in dem Speicherplatz wird die Adresse der Anteilgruppe im Nebenstrom abgelegt und diese Adresse wird als Ergebnis der Prüfung der Anteilgruppe im weiteren verwendet. Eine Möglichkeit eine Übereinstimmungsprüfung von Anteilgruppen bzw. der Werte von Anteilgruppen, mit bereits erfassten Anteilgruppen bzw. deren Werten, durchzuführen, ist die Zuordnung einer Abbildung, insbesondere eines numerischen Hashwertes zu einer Anteilgruppe bzw. zu einem Wert einer Anteilgruppe. Zu gleichen Anteilgruppen, also zu Anteilgruppen mit gleichen Werten, werden gleiche Hashwerte berechnet. Insbesondere kann eine eindeutige Zuordnung des Wertes einer Anteilgruppe zu einem Hashwert gegeben sein. Anhand des Hashwertes, insbesondere in Abhängigkeit von dem Hashwert, wird einer Anteilgruppe, bzw. dem Wert einer Anteilgruppe, insbesondere der Elementadresse einer Anteilgruppe, ein Speicherplatz in einem Speicherbereich zugewiesen. Die Speicherplätze des Speicherbereiches sind hierbei entweder als mit einer Elementadresse belegt oder als nicht belegt, also frei markiert. Bei einem der Anteilgruppe zugewiesenen freien Speicherplatz wird die Anteilgruppe bzw. der Wert der Anteilgruppe als bisher noch nicht erfasst und somit als neu bzw. unerkannt angesehen und in den zugeordneten Nebendatenstrom ausgegeben. **In** den freien Speicherplatz wird die Elementadresse der Anteilgruppe in dem Nebendatenstrom, also die in den Nebendatenstrom adressierende Elementadresse gespeichert. Diese abgelegte Adresse wird zur Übereinstimmungsprüfung weiterer Anteilgruppen, bzw. der Werte der Anteilgruppen, durch den Verweis auf die Anteilgruppe im Nebendatenstrom verwendet.

In einer Weiterbildung des Verfahrens wird bei einem als belegt markiertem Speicherplatz die durch die im Speicherplatz angegebene Elementadresse adressierte Anteilgruppe aus dem Nebenstrom mit der abzuspeichernden Anteilgruppe auf Übereinstimmung geprüft und bei Übereinstimmung wird die im Speicherplatz angegebene Adresse in den Ausgabestrom ausgegeben.

In einer Weiterbildung der Erfindung wird bei Nichtübereinstimmung der Anteilgruppe mit der durch den belegten Speicherplatz adressierten Anteilgruppe, der abzuspeichernden Anteilgruppe durch den Hashwert ein alternativer Speicherplatz zugeordnet, für diesen alternativen Speicherplatz wird eine weitere Übereinstimmungsprüfung durchgeführt und bei weiteren Nichtübereinstimmungen werden weitere alternative Speicherplätze zugeordnet. Bei Nichtübereinstimmung der Anteilgruppe, bzw. des Wertes der Anteilgruppe, die der Elementadresse im Speicherplatz zugeordnet ist, mit der erfassten Anteilgruppe, bzw. mit dem Wert der erfassten Anteilgruppe, wird der zu speichernden Anteilgruppe ein weiterer Speicherplatz über den Hashwert zugeordnet. Zu diesem weiteren Speicherplatz wird wieder eine Übereinstimmungsprüfung durchgeführt. Bei Übereinstimmung der abzuspeichernden Anteilgruppe bzw. deren Werten mit der durch die im weiteren Speicherplatz abgelegte Adresse adressierten Anteilgruppe bzw. deren Wert, wird die im Speicherplatz hinterlegte Elementadresse in den Ausgabedatenstrom ausgegeben. Bei Nichtübereinstimmung kann ein weiterer Speicherplatz über den Hashwert ausgewählt werden. Die Anzahl der Zyklen, also die Anzahl an alternativ zugewiesenen Speicherplätzen, kann durch Einstellungen vorgegeben werden. Beispielsweise kann bei Nichtübereinstimmung der abzuspeichernden Anteilgruppe mit der im dritten zugewiesenen Speicherplatz adressierten Anteilgruppe die im dritten Speicherplatz hinterlegte Elementadresse durch die Elementadresse der abzuspeichernden Anteilgruppe ersetzt werden.

In einer Weiterbildung der Erfindung wird bei Nichtübereinstimmung der Anteilgruppe mit der durch den belegten Speicherplatz adressierten Anteilgruppe, die Adresse der Anteilgruppe im Nebenstrom in den Speicherplatz abgelegt, wobei der ursprüngliche Inhalt des Speicherplatzes ersetzt wird. Bei Nichtübereinstimmung der abzuspeichernden Anteilgruppe mit der durch die Elementadresse im zugewiesenen Speicherplatz adressierten Anteilgruppe kann die im zugewiesenen Speicherplatz hinterlegte Elementadresse durch die Elementadresse der abzuspeichernden Anteilgruppe ersetzt werden. Hierdurch werden zu älteren Daten verweisende Elementadressen zu zuvor durch den Datenstrom ausgegebene Daten verweisende Elementadressen, ersetzt, da gegebenenfalls davon ausgegangen werden kann, dass diese Daten zur aktuellen Verarbeitung nicht mehr benötigt werden.

In einer Weiterbildung der Erfindung wird, bei wiederkehrender Belegung der Speicherplätze, der Speicherplatz mit der kleinsten Elementadresse als nicht belegt definiert und bei einer im Speicherplatz enthaltenen, außerhalb des verfügbaren Nebenstromintervalls gelegenen Adresse wird der Speicherplatz als unbelegt definiert. Wenn es beispielsweise bei mehrfacher Durchführung des Verfahrens zu einer wiederkehrenden Belegung der der Anteilgruppe zugewiesenen Speicherplätze kommt, also falls beispielsweise einer Anteilgruppe zyklisch hintereinander dieselben Speicherplätze zugeordnet werden, kann der Speicherplatz mit der kleinsten Elementadresse als nicht belegt definiert werden. Die kleinste Elementadresse einer adressierten Anteilgruppe deutet darauf hin, dass die Anteilgruppe vor den in den weiteren Speicherplätzen adressierten Anteilgruppen in dem Datenstrom ausgegeben wurde und somit die Daten der Anteilgruppe älter sind. Somit kann die Elementadresse der älteren Anteilgruppe mit der Elementadresse der nun abzuspeichernden Anteilgruppe überschrieben werden.

Zur Übereinstimmungsprüfung wird eine mehrstufige Übereinstimmungsprüfung angewendet, wobei der Wert eines Datenstromelementes zunächst in einem globalen, mindestens einer Gruppe aus Anteilgruppen zugeordneten Bereich, verarbeitet und als Ergebnis in eine Adresse im Nebenstrom gewandelt wird, diese Adresse wird in einer zweiten Stufe in mindestens einer Untergruppe aus der Gruppe aus Anteilgruppen zugeordneten Bereich und Nebenstrom zugeordnet, dieser Nebenstrom enthält dann diese Adressen statt direkt Anteilgruppenwerte und wird damit als Index in dem Hauptnebenstrom angesehen, und dieser zusätzliche Nebenstrom enthält dadurch nur Adressen, welche in dieser Untergruppe aufgetreten sind.

In einer Weiterbildung des Verfahrens wird zur Übereinstimmungsprüfung eine mehrstufige Übereinstimmungsprüfung angewendet, wobei in einer ersten Stufe der Wert eines Datenstromelementes erfasst wird, wobei der Wert des Datenstromelementes aus Elementanteilen besteht, dem aus Elementaranteilen bestehenden Wert des Datenstromelementes wird eine Adresse in einem ersten Nebendatenstrom zugeordnet und in einer zweiten Stufe wird dieser Adresse mindestens eine Gruppe der Adressen der Elementanteilen in einem weiteren Nebendatenstromes zugeordnet, wobei dieser weitere Nebendatenstrom Adressen der Elementanteile enthält und somit als Index in den ersten Datenstrom fungiert. Beispielsweise kann es sich bei Datenstromelementen um log-files eines Servers handeln, in denen beispielsweise als Wert ein Zeitstempel, die Bezeichnung eines verwendeten Clients, der verwendete Browser und die aufgerufene Website sowie ein Zeitstempel eingetragen sind. Die Elementanteile des Datenstromelementes sind hierbei durch den verwendeten Client, den verwendete Browser und die aufgerufene Website gegeben. Beispielsweise kann ein Zeitstempel von den weiteren Elementanteilen abgetrennt und getrennt verarbeitet werden. Es gibt verschiedene mögliche Kombinationen von Client, Browser und aufgerufener Website. Jeder Kombination wird eine Adresse in einem Nebendatenstrom zugeordnet. Einem Datenstromelement, hier also einem log-file, kann eine Adresse in einem Nebendatenstrom zugeordnet werden, so dass über einen Index die Kombination der im Datenstrom enthaltenen Elementanteile adressiert wird.

Zur Bildung und Zuordnung einer Prüfungsstufe wird nicht ein Gruppentyp, sondern ein Wert oder eine Adresse innerhalb einer Gruppe verwendet, in dieser Stufe werden Werte einer zweiten Anteilgruppe auf Übereinstimmung geprüft und darüber werden im zugeordneten Nebenstrom nur Elementadressen ausgegeben, welche einer Kombination aus dem Wert der Stufe und dem Wert der Anteilgruppe entsprechen.

In einer Weiterbildung des Verfahrens wird ein Datenstromelemente aufweisender Datenstrom erfasst, wobei die Datenstromelemente aus voneinander verschiedenen Elementanteilen aufgebaut sind, die Elementanteile aller Datenstromelemente können in Kategorien sortiert werden, die mit einem Elementanteil einer ersten Kategorie zusammen in einem Datenstromelement vorkommenden Elementanteile weiterer Kategorien werden auf Übereinstimmung geprüft und die mit den Elementanteilen der ersten Kategorie in weiteren Datenstromelementen zusammen vorkommenden Elementanteile werden in einem Nebendatenstrom ausgegeben.

Beispielsweise kann ein Datenstrom aus Datenstromelementen aufgebaut sein, wobei die Datenstromelemente beispielsweise log-files eines Servers sein können. Die Datenstromelemente, also beispielsweise die log-files, können aus Elementanteilen verschiedener Kategorien bestehen. Beispielsweise kann die Bezeichnung des verwendeten Clients eine erste Kategorie, die Browser-Bezeichnung oder die aufgerufene Website jeweils eine weiter Kategorie angegeben. Beispielsweise kann nun jedem Client-Wert, beispielsweise Client A, Client B, ein elementadressierbarer Nebendatenstrom zugeordnet werden, in dem beispielsweise die von jedem Clienttyp verwendeten Browser bzw. die von jedem Clienttyp aufgerufenen Webseiten enthalten sein können. Somit ist ein sehr schneller Zugriff auf Informationen, beispielsweise welche Webseiten von einem Clienttyp aufgerufenen wurden oder welche Browser von einem Clienttyp verwendet wurden, ermöglicht.

Jedem unterschiedlichen Wert aus der einen Anteilgruppe werden der aktuelle Wert oder die Adresse einer zweiten Anteilgruppe zugeordnet und diese wird in einem, nach Wert oder Adresse der ersten Gruppe sortierten Speicherbereich abgelegt, dieser Speicherbereich wird als Element eines neuen Eingangsdatenstroms einer weiteren Stufe nach dem Verfahren angesehen, in dieser werden wieder eine nach Einteilung in Gruppen angewandten Übereinstimmungsprüfung zugeführt, und darüber erfolgt als Ausgabestromergebnis eine Erkennung von Mustern und Abfolgen von Werten in Gruppen.

In einer Weiterbildung des Verfahrens besteht ein Datenstromelement aus Elementanteilen, die Elementanteile eines Datenstromelementes lassen sich in mindestens zwei Kategorien sortieren, jedem Elementanteil einer ersten Kategorie ist mindestens ein Elementanteil einer zweiten Kategorie zugeordnet, die Zuordnung der Elementanteile eines Datenstromelementes wird auf Übereinstimmung mit der Zuordnung der Elementanteile der weiteren Datenstromelemente überprüft und der Zuordnung der Elementanteile wird eine Adresse in einem Nebendatenstrom zugeordnet.

Die Elementanteile eines Datenstromelementes werden beispielsweise in zwei Kategorien sortiert. Beispielsweise kann es sich bei den Elementanteilen der ersten Kategorien um die Bezeichnung verschiedener elektrischer Verbraucher handeln, während die Elementanteile der zweiten Kategorie aus den Zuständen der Verbraucher, beispielsweise ob die Verbraucher angeschaltet oder ausgeschaltet sind, bestehen. Der derzeitige Zustand aller Verbraucher, also die Zuordnung der Elementanteile der ersten Kategorie zu den Elementanteilen der zweiten Kategorie, kann einer Adresse in einem Nebendatenstrom zugeordnet werden. Somit können wiederkehrende Zustände, beispielweise wenn die Verbraucher A und B angeschaltet sind und die Verbraucher C und D ausgeschaltet sind, rechenzeiteffektiv wiedererkannt und mit einer geringen Datenübertragung übertragen werden.

In einer Weiterbildung des Verfahrens werden Verfahrensschritte innerhalb einer Stufe oder in kaskadierenden Stufen und damit zeitlich und räumlich getrennt angewendet.

Im Folgenden wird das erfindungsgemäße Verfahren anhand eines Ausführungsbeispiels weiter erläutert:

### Beispiel: Apache Webserver Access Logdatei

Zur Info: Die hier betrachtete Logdatei ist vollständig zufällig generiert.

Im Folgenden werden folgende Symbole verwendet:
xyz - Identifier (z.B. Teilelementname, Gruppe, ...)
... - Synonym für beliebigen Inhalt
|xyz| - Teilelement
@xyz@ - Gruppe / Teilgruppe
[...] - kennzeichnet ein Array bzw. gruppierte Daten
{...} - kennzeichnet eine Erkennungsstufe / Map
~...~ - kennzeichnet einen Stream
xyz[...] - Form für benannte Struktur, hier: ein Array xyz mit Elementen ...
xyz[a,b,c] - spezialisierte Form, hier: Array xyz mit Elementen a, b und c
xyz{} - Erkennungstufe / Map
~xyz~ - Strom / Teilstrom / Nebenstrom / Ausgabestrom
abc>~xyz~ - Adresse eines Elements abc im Strom xyz

Das Format dieser Logdateien ist üblicherweise wie folgt:

### Beispiel:

192.168.178.13 - - [02/Jun/2015:22:49:39 +0100] "img/nord.png" 200 1928384 "www.blog_ueber_dinge.de/wir/im/urlaub/2014/April/links" "Mozilla/5.0 (Linux; Android 4.4.2; A3-A20 Build/KOT49H) AppleWebKit/537.36 (KHTML, like Gecko) Chrome/57.0.2987.132 Safari/537.36" "-"
192.168.178.13 - - [02/Jun/2015:22:52:35 +0100] "img/whg1.png" 200 283212 "img/nord.png" "Mozilla/5.0 (Linux; Android 4.4.2; A3-A20 Build/KOT49H) AppleWebKit/537.36 (KHTML, like Gecko) Chrome/57.0.2987.132 Safari/537.36" "-"
192.168.178.192 - - [02/Jun/2015:23:01:06 +0100] "img/whg2.png" 200 483722 "www.reisebuero.net?kunde=12382ajablkdsu12" "Mozilla/5.0 (Linux; Android 4.4.2; de-at; SAMSUNG GT-I9301I Build/KOT49H) AppleWebKit/537.36 (KHTML, like Gecko) Version/1.5 Chrome/28.0.1500.94 Mobile Safari/537.36" "-"
192.168.178.192 - - [02/Jun/2015:23:06:52 +0100] "photos/0001.png" 200 -1 "img/whg2.png" "Mozilla/5.0 (Linux; Android 4.4.2; de-at; SAMSUNG GT-I9301I Build/KOT49H) AppleWebKit/537.36 (KHTML, like Gecko) Version/1.5 Chrome/28.0.1500.94 Mobile Safari/537.36" "-"
Abstrahiert sind in jeder Zeile (getrennt durch "\n") folgende Teile/Unterelemente enthalten:
   |host| - - [|timestamp|] "|request|" |code| |size| "|referer|" "|agent|" "|aux|"

### Definition:

```
  |host| : die URL/Adresse des Aufrufenden
  |timestamp|: Zeitstempel (Format:
  Tag/Monat/Jahr:Stunde:Minute:Sekunde Abweichung zur Greenwich Zeit)
  Anfrage Ergebniscode Dateigröße Browserangabe
  |request| : die angeforderte Webseite / Datei
  |code| : der HTTP Antwort Code, z.B. 200 für Ok
  |size| : übermittelte Dateigröße
  |referer| : verlinkende, vom Besucher vorher gesehene Seite
  |agent| : Beschreibung des Browsers / Tools, mit dem die Webseite
  besucht wird
  |aux| : ?
```

Aus dieser Betrachtung und logischer Analyse wurde folgende Aufteilung/Gruppierung ermittelt:
Gruppe @req@: |host| + |agent| (es ist anzunehmen, das Anfragen von $host in weiten Teilen mit demselben Browser $agent erfolgen => ähnliche Änderungsfrequenz)
Gruppe @pag@: |request| + |code| + |size| (Annahme: gleiche Dateianfragen werden üblicherweise mit gleichem Antwortcode $code und gleicher Dateigröße $size beantwortet)
Gruppe @utc@: |timestamp| (eigentlich keine Gruppe; Zeitstempel wird keiner Wiedererkennung zugeführt und getrennt behandelt, eine Wiederholung ist nicht zu erwarten)

Gruppe @ref@: die verlinkende Seite
Gruppe @aux@: |aux| wird in dieser Betrachtung ignoriert (im vorliegenden Beispiel ist diese Feld immer leer)

Auf dieser Basis werden nun entsprechende Datenstrukturen erzeugt/ Speicherbereiche vorgesehen:
{RAW}: erste Erkennungsstufe, hier werden zunächst alle relevanten Gruppen (@req@, @pag@, @ref@) verarbeitet
   - in dieser Stufe findet die eigentliche Wiedererkennung der Gruppenwerte statt, Werte werden zu Adressen im Nebenstrom ~RAW~
   - als Datenstruktur wird ein Bereich aus 1000 Speicherplätzen (Slots) für Adressen im Nebenstrom angelegt
   - außerdem wird ein Ringpuffer für den Werte-Nebenstrom mit 1MB Datenvolumen vorgehalten (darin enthalten die 1MB letzten Werte für die Übereinstimmungsprüfung)
   - außerdem wird ein Ringpuffer für den Index-Nebenstrom mit 1000 Elementen vorgehalten (darin enthalten die 1000 Offsets in den Werte-Nebenstrom nfür die Übereinstimmungsprüfung; die Werte sind von variabler Länge; der Index-Nebenstrom dient zur Herstellung der Elementaddressierbarkeit)
{Req}: nachgeschaltete Erkennungsstufe zur Bildung einer Liste von Besuchern
   - hier werden die zuvor ermittelte Adressen nochmals verarbeitet, und in dieser Gruppe zugeordneten Adresse im (Adress-) Nebenstrom ~Req~ umgewandelt
   - als Datenstruktur wird ein Bereich aus 100 Speicherplätzen (Slots) für je zwei Adressen angelegt
{Pag}: nachgeschaltete Erkennungsstufe zur Bildung einer Liste von besuchten Seiten
   - hier werden die zuvor ermittelte Adressen nochmals verarbeitet, und in dieser Gruppe zugeordneten Adresse im (Adress-) Nebenstrom ~Pag~ umgewandelt
   - als Datenstruktur wird ein Bereich aus 100 Speicherplätzen (Slots) für je zwei Adressen angelegt
{Ref}: nachgeschaltete Erkennungsstufe zur Bildung einer Liste von besuchten Seiten
   - hier werden die zuvor ermittelte Adressen nochmals verarbeitet, und in dieser Gruppe zugeordneten Adresse im (Adress-) Nebenstrom ~Ref~ umgewandelt
   - als Datenstruktur wird ein Bereich aus 100 Speicherplätzen (Slots) für je zwei Adressen angelegt

Die erzeugten Datenstrukturen werden mit einem Wert vorbelegt (hex 0xFFFFFFFF), zur Kennzeichnung eines "leeren" Slots.

Da Werte in der "Gruppe" @utc@ vorraussichtlich stetig ändern, werden diese keiner Wiedererkennung zugeführt; stattdessen erfolgt hier eine Umwandlung in einen Unix Zeitstempel,
welcher als 32bit unsigned integer gespeichert werden kann (4 bytes), und als Sekunden seit 1.1.1970 angegeben ist.

Die Wandelbarkeit in einen 4 Byte Wert ist außerdem aus Sicht der Datenreduktion gleichwertig mit dem Erkennen und Wandeln in eine Adresse (hier ebenfalls 32bit).

Alle ermittelten Gruppenadressen werden dann zusammen mit dem gewandelten Zeitstempel zu einem Ausgabeelement kombiniert und im Ausgabestrom angehängt.

Es ergibt sich nach Verarbeitung also folgende Struktur:

```
 RAW~firstReq,firstPag,firstRef,secondReq,secondPag...~
 Req~firstReq>RAW,secondReq>RAW...~
 Pag~firstPag>RAW,secondReq>RAW...~
 Ref~firstRef>RAW,secondRef>RAW...~
 Ausgabe-[timestamp, first>Req, first>Pag, first>Ref],[timestamp,
 second>Req, second>Pag, second>Ref],...~
```

Nach Definition/Generierung der nötigen Datenstrukturen wird nun die Logdatei als Eingangsstrom elementweise verarbeitet.

### Eingangselement:

192.168.178.13 - - [02/Jun/2015:22:49:39 +0100] "img/nord.png" 200 1928384 "www.blog_ueber_dinge.de/wir/im/urlaub/2014/April/links" "Mozilla/5.0 (Linux; Android 4.4.2; A3-A20 Build/KOT49H) AppleWebKit/537.36 (KHTML, like Gecko) Chrome/57.0.2987.132 Safari/537.36" "-"

### Aufteilung in Unterelemente:

```
 |host| : 192.168.178.13
 |utc| : 02/Jun/2015:22:49:39 +0100
 |request|: img/nord.png
 |code| : 200
 |size| : 1928384
 |referer|: www.blog_ueber_dinge.de/wir/im/urlaub/2014/April/links
 |agent| : Mozilla/5.0 (Linux; Android 4.4.2; A3-A20 Build/KOT49H)
 AppleWebKit/537.36 (KHTML, like Gecko) Chrome/57.0.2987.132
 Safari/537.36
 |aux| : -
```

### Gruppierung:

```
 @utc@ : 02/Jun/2015:22:49:39 +0100 // |utc|; entspricht 1433281807
 (Sekunden seit 1.1.1970)
 @req@ : [192.168.178.13,Mozilla/5.0 (Linux; Android 4.4.2; A3-A20
 Build/KOT49H) AppleWebKit/537.36 (KHTML, like Gecko)
 Chrome/57.0.2987.132 Safari/537.36] // |host|,|agent|
 @pag@ : [img/nord.png,200,1928384] // |request|,|code|,|size|
 @ref@ : www.blog_ueber_dinge.de/wir/im/urlaub/2014/April/links //
 |referer|
```

### Erkennung in der ersten Stufe (Stufe {RAW}):

1) Generierung eines Hashwerts für @req@: h = hash("[192.168.178.13,Mozilla/5.0 (Linux; Android ....]") = 2003304065
2) Wahl eines Slots über h: h modulo 1000 = 65 = slotA // wir haben als Datenstruktur ein Array mit 1000 Slots gewählt
3) Prüfen des Slots:
   wenn als "leer" markiert (0xFFFFFFFF) oder Adresse außerhalb des Index-Ringpufferbereichs oder Index-Wert (Offset) außerhalb ds Werte-Ringpufferbereichs:
      Ausgabe des Wertes von @req@ in den ~RAW~ Wertenebenstrom über Anhängen an den Werte-Ringpuffer
      Ausgabe der (Byte) Adresse des Wertes im Wertenebenstrom (Ringpuffer) in den Indexnebenstrom (Index-Ringpuffer)
      Adresse (=Nummer des Elements im Indexstrom) im ermittelten Slot merken und auch als Ergebnis zurückgeben
   ansonsten (gültige Adresse vorhanden), damit verknüpften Wert ermitteln und mit aktuellem Wert von @req@ vergleichen
   wenn Werte übereinstimmen:
      Slotinhalt (=Adresse) zurückgeben
   Wenn Werte nicht übereinstimmen:
      Slotinhalt verwerfen
      Ausgabe des Wertes von @req@ in den ~RAW~ Wertenebenstrom über Anhängen an den Werte-Ringpuffer
      Ausgabe der (Byte) Adresse des Wertes im Wertenebenstrom (Ringpuffer) in den Indexnebenstrom (Index-Ringpuffer)
      Adresse (=Nummer des Elements im Indexstrom) im ermittelten Slot merken und auch als Ergebnis zurückgeben
   da hier der erste Wert betrachtet wird, ist das Ergebnis die Adresse 0

### Erkennen in der zweiten Stufe (hier {Req}):

1) Wahl eines Slots über die zuvor ermittelte Adresse req>RAW (=0): req>RAW modulo 100 = 0 = slot // wir haben hier eine Struktur mit 100 Elementen gewählt
2) Prüfen des Slots (Platz 1 des Slots, je Slot 2 Plätze):
   wenn leer (0xFFFFFFF):
      Ausgabe von req>RAW im ~Req~ Nebenstrom
      req>RAW im ersten Platz des Slots (je Slot 2 Plätze) merken
      Adresse (=Nummer im Nebenstrom) im zweiten Platz des Slots merken und als Ergebnis zurückgeben
   wenn gleich:
      Ausgabe der Adresse im zweiten Platz des Slots als Ergebnis wenn ungleich:
      Ausgabe von req>RAW im ~Req~ Nebenstrom
      req>RAW im ersten Platz des Slots (je Slot 2 Plätze) merken
      Adresse (=Nummer im Nebenstrom) im zweiten Platz des Slots merken und als Ergebnis zurückgeben

Analog wird für die weiteren Gruppen @pag@ und @ref@ verfahren.

Als Ergebnis liegen nun drei Adressen und ein Zeitstempel, je als unsigned integer 32bit (4 bytes) vor.

Diese werden nun als Gruppe [timestamp, first>Req, first>Pag, first>Ref] dem Ausgabestrom angehängt.

Das Verfahren beginnt dann von vorne mit dem nächsten Element des Eingangsstroms.

Im Folgenden wird die Erfindung anhand eines in der Zeichnung dargestellten Ausführungsbeispiels weiter erläutert. Die Figuren zeigen:
- Figur 1:: eine schematische Darstellung der Zuordnung eines Indexdatenstromes zu einem Datenstrom;
- Figur 2:: eine schematische Darstellung der Übereinstimmungsprüfung einzelner Anteilgruppen mittels der Zuordnung eines Hashwertes;
- Figur 3:: eine schematische Darstellung der voneinander getrennten Verarbeitung von Anteilgruppen;
- Figur 4:: eine schematische Darstellung des Austausches von Nebendatenströmen mit weiteren Datenströmen.

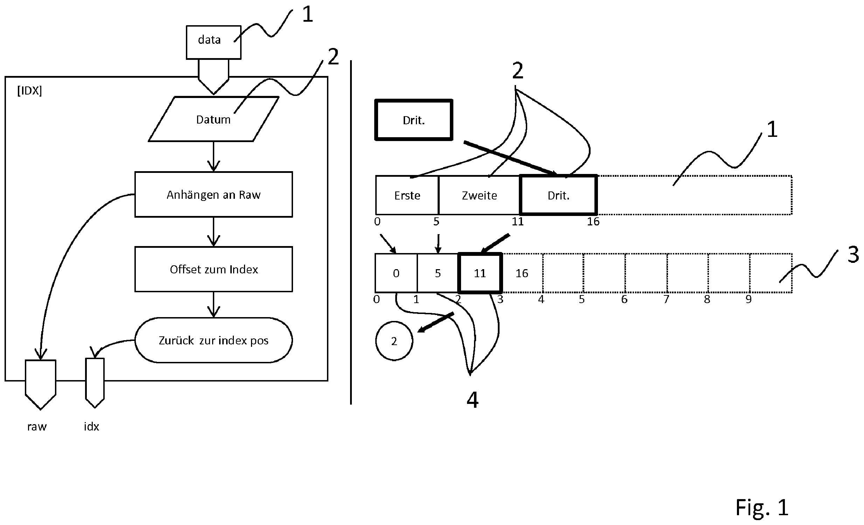

In Figur 1 ist schematisch anhand eines Ausführungsbeispiels dargestellt, wie einem Datenstrom 1, der mindestens zwei Datenstromelemente 2 mit variabler Länge aufweist, ein Indexdatenstrom 3 zugeordnet werden kann. Im Allgemeinen weist ein einzelnes Datum, also ein Datenstromelement 2 eines Datenstromes, eine variable Länge auf. Hierbei kann es sich beispielsweise um die Dateipfade bzw. im weiteren Verlauf auch um den Dateiinhalt, innerhalb von Datenströmen, hier eine Liste von Dateipfaden, handeln. In diesem Beispiel handelt es sich bei den Datenstromelementen um Worte, die unterschiedlich lang sein können, also unterschiedlich viele Buchstaben enthalten können. Für den gezielten Zugriff muss der gesamte Datenstrom 1 sequentiell gelesen werden, um Datumsanfang, Länge bzw. Ende zu ermitteln. Um einen indexbasierten Zugriff zu ermöglichen, wird bei Datenerfassung, beispielsweise beim Lesen der Datei, ein zusätzlicher, elementadressierbarer Indexdatenstrom 3 erzeugt. Der Indexdatenstrom 3 kann Offsets der einzelnen Daten des eigentlichen Datenstroms 1 enthalten. Dieser neue Indexdatenstrom 3 besteht aus lauter Einträgen, also Indexdaten 4 gleicher Länge, beispielweise 32bit Integer. Die Position des n-ten Eintrags lässt sich so also über einfache Berechnung, in diesem Fall n * 4 bytes ermitteln, welcher dann an den Anfang des zugeordneten Datums im Datenstrom referenziert. Dieser Index 4 in den neuen Datenstrom 1 kann nun zusätzlich zur Identifikation, also als ID des Datums verstanden werden, wobei bislang noch keine Wiedererkennung gleicher Datenteile erfolgt.

Der eigentliche Datenstrom 1 kann nun weiterverarbeitet werden. Beispielsweise referenziert sich beim Austausch des Indexdatenstroms 3 durch einen dazu angepassten, weiterverarbeiteten Datenstrom der selbe Index 4 aus dem Indexdatenstrom 3 stets auf den gleichen, nun aber weiterverarbeiteten Datensatz, beispielsweise statt auf den Dateipfad nun auf den Dateiinhalt. Als Grundstruktur und Basiskonzept zur Referenzierung kann die entstandene ID außerdem wegen ihres sequentiellen Charakters, beispielsweise kann es sich um eine fortlaufende Nummer handeln, auch direkt zur Synchronisierung oder "Lazy Loading/Processing" Konzepten genutzt werden. Das heißt bei Abfrage eines bestimmten Index/ID kann über z.B. Paging-Strukturen (ähnlich dem Virtual Memory Konzepten) geprüft werden, ob schon (weiterverarbeitete) Daten verfügbar sind, und so nur bei Bedarf nachgeladen/verarbeitet werden.

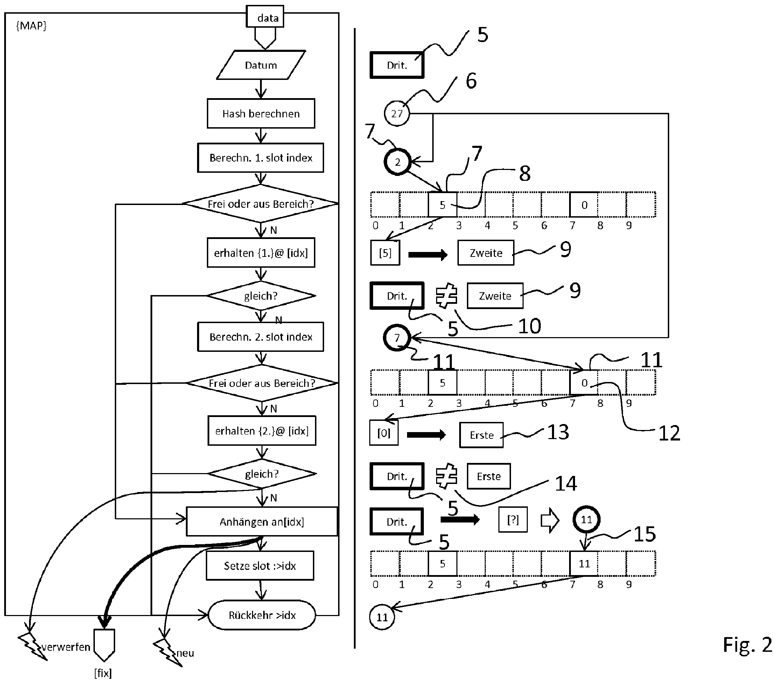

In Figur 2 ist die Übereinstimmungsprüfung einzelner Anteilgruppen 5, in diesem Beispiel einzelne Worte, mittels der Zuordnung eines Hashwertes 6 schematisch dargestellt. Im Folgenden ist nun der Hintergrund gleiche Daten bzw. Dateiinhalte möglichst wiederzuerkennen. Hierzu werden in der Betrachtung die stark veränderlichen Elementanteile, wie der Dateipfad, der Zeitstempel oder Ähnliches, von den sich wiederholenden Elementanteilen 5, wie beispielsweise die eigentlichen Dateiinhalte oder in diesem Beispiel Worte, getrennt, wobei der Fokus zunächst auf die sich wiederholenden Elementanteile 5 gerichtet wird.

Basis des Verfahrens ist eine Anordnung, ein sogenanntes Array aus oben definierten Indexeinträgen. Diese Anordnung wird als MAP bezeichnet. Diese MAP wird mit der oben definierten Kombination aus Datenströmen und indexierten Nebenströmen verbunden.

Für jeden eingehenden Datensatz, beziehungsweise wie oben beschrieben für die vorher extrahierten Elementanteile 5, hier für jedes Wort, wird über gängige Verfahren, wie beispielsweise xxhash, ein Hashwert 6 berechnet. Dieser wird nun genutzt, um einen Speicherplatz 7, einen so genannten Slot in der MAP auszuwählen. Beispielsweise kann sich die Slotnummer berechnen durch: slotNr = hash modulo Mapgrösse. Ist dieser Slot noch unbelegt bzw. der Index bzw. die dadurch referenzierte Anteilgruppe des Nebenstromes außerhalb eines vorher definierten Datenintervalls, wird das Datum nun als neuer Eintrag in den OFF/DAT Strömen, also den Indexdatenstrom bzw. Nebendatenströmen angefügt. Der zugehörige Index, also die Elementadresse, wird im zugeordneten Slot gespeichert und im Ergebnis wird dieser Index in den MAP-Ausgabestrom angefügt. Bei dem Dateiintervall kann es sich um ein gleitendes Datenfenster von verfügbaren Einträgen im OFF/DAT-Strom, gemessen vom letzten aktuellen Eintrag z.B. 1000 Einträge im Cache bzw. z.B. 1GB an Daten im Cache handeln.

Ist der Slot nicht leer, wird zunächst der über den enthaltenen Index 8 referenzierte Inhalt 9 mit dem aktuellen verglichen. Bei Ungleichheit 10 wird ggf. aus dem Hashwert 6 ein neuer Slot 11 ausgewählt, beispielsweise durch Rekombination der genutzten Bytes bzw. andere Teilung oder Ähnliches, und anschließend wird das Verfahren mit diesem neuen Slot 11 fortgeführt. Dies wird solange wiederholt, bis ein freier bzw. alter Slot gefunden wurde oder eine weitere Wiederholung ggf. als nicht sinnvoll erachtet wird. Hierbei kann eine Abwägung von Nichtwiedererkennen und Zeitaufwand-durch-Wiederholung erfolgen. Beispielsweise kann bei wiederholter Zuordnung der Anteilgruppe 5 zu belegten Slots 7, 11 ein belegter Slot 11 mit der abzuspeichernden Anteilgruppe 5 überschrieben werden. Insbesondere kann die abzuspeichernde Anteilgruppe 5 mit der, über den in dem erneut zugeordneten Slot 11 enthaltene Index 12 referenzierte Inhalt 13 verglichen werden. Bei mangelnder Übereinstimmung 14 kann der Slot 11 mit der abzuspeichernden Anteilgruppe 5 überschrieben 15 werden. Bei Gleichheit wird der Index im MAP-Ausgabestrom zurückgegeben. Die Größe des Cachefensters, der MAP, die Anzahl an Wiederholungen und die Qualität des Hashverfahrens sind Einstellungsmöglichkeiten für eine möglichst optimale Erkennung gleicher Daten. Somit ist es ermöglicht, das Verfahren auf beliebige Datenmengen mit begrenzten Ressourcen, beispielsweise begrenztem Speicherplatz anzuwenden und ggf. durch mehrfache Verfahrensdurchläufe eine annähernd 100% Erkennung zu ermöglichen. Hierbei sind beispielsweise "Kollisionen" über den Hashwert, je nach Größe der MAP als relativ selten anzusehen.

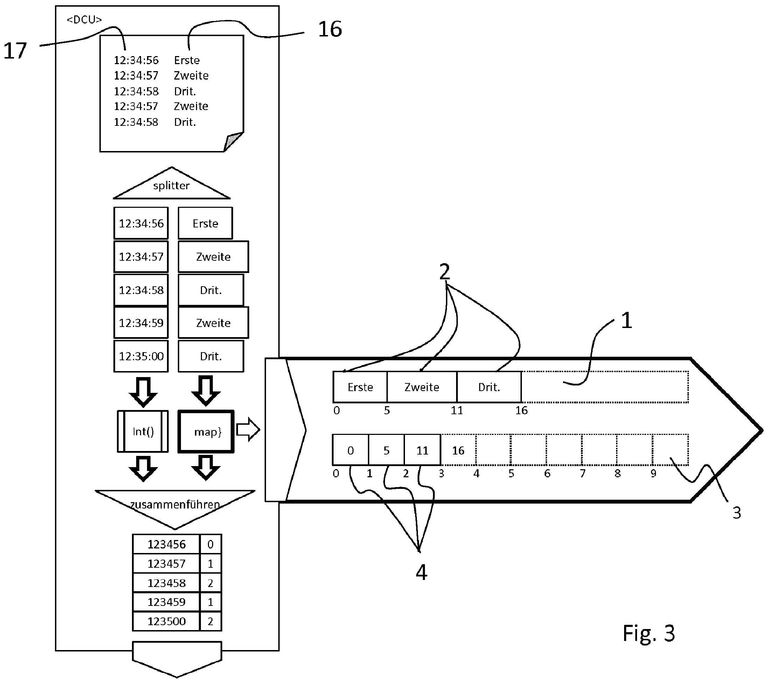

In Figur 3 ist eine voneinander getrennte Verarbeitung von Anteilgruppen schematisch dargestellt. Wie bereits beschrieben, werden vorab sich potentiell wiederholende Elementanteile 16, also wie hier dargestellt einzelne Worte, wie Dateiinhalte, von potentiell eindeutigen, sich nicht wiederholenden Elementanteilen 17, wie beispielsweise Dateipfade, hier Zeitstempel, oder Ähnliches getrennt. Diese Trennung erfolgt in einem übergeordneten Verfahrensschritt. Die einzelnen Teile werden dann ggf. eigenen Verarbeitungsströmen gemäß Fig. 2 zugeführt bzw. direkt weiterverwendet und in Relation zu den anderen Teilergebnissen referenzierend im Ergebnis(-strom) 25 angefügt.

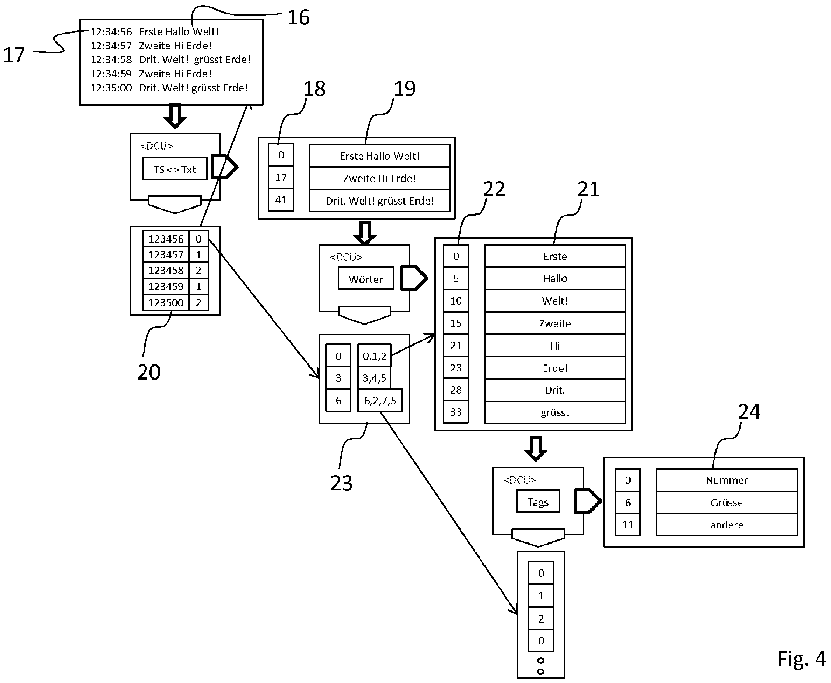

In Figur 4 ist eine schematische Darstellung des Austausches von Nebendatenströmen mit weiteren Datenströmen dargestellt. Beispielweise nach einem ersten Verfahrensdurchlauf können die Daten weiterverarbeitet werden. Durch Austausch der OFF Datenströme können die durch Indexe bzw. Elementadressen referenzierten Dateneinträge jeweils auf zusätzliche oder auch angepasste Daten verweisen. Denkbar wäre, die Dateien beispielsweise über weitergehende Analysen, wie beispielsweise einer Bilderkennung oder Ähnliches mit Schlüsselworten, wie beispielsweise bei Fotos Auflösung, Motiv, enthaltene Standorte zu versehen. Eine Analyse ist dann nur einmal notwendig, da bei Wiederholung die Analyseergebnisse direkt wiederverwendet werden können. Im Beispiel konnten Dateipfade auf gleiche Inhalte durch Links auf die zuvor als erstes erkannte Datei markiert werden, der eigentliche Inhalt muss also nur einmal gespeichert werden. Beispielsweise können sich wiederholende Elementanteile 16, wie beispielsweise Dateiinhalte, oder in diesem Beispiel aus Worten bestehende Sätze, von sich nicht wiederholenden Elementanteilen 17, wie beispielsweise Zeitstempel, getrennt werden. Zu dem Datenstrom 16 mit den sich wiederholenden Elementanteilen kann ein Indexdatenstrom 18 erzeugt werden, der in den Nebendatenstrom 19 verweist. Es kann ein Ausgabedatenstrom 20 ausgegeben werden, der in den Nebendatenstrom 19 verweist. Der Nebendatenstrom 19 kann weiter in sich wiederholende Elementanteile, hier einzelne in den Sätzen vorkommende Worte, aufgeteilt werden, die in einem weiteren Nebendatenstrom 21 zusammengefasst werden können. Ein weiterer Indexdatenstrom 22 kann in den Nebendatenstrom 21 verweisen. Hierzu kann ein weiterer Ausgabedatenstrom 23 erzeugt werden, der in den Nebendatenstrom 21 verweist. Somit ersetzen der Ausgabedatenstrom 23, der Nebendatenstrom 21 und der Indexdatenstrom 22 den Nebendatenstrom 19 mit dem Indexdatenstrom 18. Ebenso können die Elementanteile in Kategorien 24 sortiert werden, wodurch der Nebendatenstrom 21 erweitert wird.

## Patentansprüche

1. Verfahren zur Reduzierung der Rechenzeit einer Datenverarbeitungseinrichtung bei der Verarbeitung von Daten eines Datenstroms, bestehend aus den Schritten:
dass
ein aus Datenstromelementen (2) bestehender Eingangsdatenstrom (1) sequenziell von mindestens einer Datenverarbeitungseinrichtung erfasst wird,
dass aus dem Eingangsdatenstrom (1) mindestens ein elementadressierbarer Datenstrom (3) erzeugt wird, um den Zugriff auf einzelne Datenstromelemente zu ermöglichen,
dass jedes Datenstromelement (2) des Eingangsdatenstromes (1) in Elementanteile aufgeteilt wird,
dass die Elementanteile nach unterschiedlichen Kategorien zu Anteilgruppen gruppiert werden,
dass Elementanteile zumindest einer Anteilgruppen mit bereits erfassten Elementanteilen der entsprechenden Anteilgruppe auf Übereinstimmung geprüft werden,
wobei aus den mit bereits erfassten Elementanteilen der zumindest einen Anteilgruppe nicht übereinstimmenden Elementanteilen der Anteilgruppe ein elementadressierbarer Nebendatenstrom (3) erzeugt wird, der die Berechnung der Position eines Elementanteils der Anteilgruppe in dem Nebendatenstrom ermöglicht,
wobei im weiteren Verlauf der Elementanteil der Anteilgruppe über ihre in den Nebendatenstrom (3) verweisende Adresse definiert ist,
dass ein Ausgabedatenstrom erzeugt wird,
wobei in dem Ausgabedatenstrom die Adressen der Elementanteile der zumindest einen Anteilgruppe in dem Nebendatenstrom (3) enthalten sind,
wobei die Abfolge der Datenstromelemente des Ausgabedatenstromes der Abfolge der Datenstromelemente (2) des Eingangsdatenstromes (1) entspricht, und
wobei als mit den bereits erfassten Elementanteilen einer der zumindest einen Anteilgruppe übereinstimmend erkannte Elementanteile der Anteilgruppe nicht erneut in dem Nebendatenstrom gespeichert werden.

2. Verfahren nach Anspruch 1, **dadurch gekennzeichnet, dass** es sich bei den Kategorien um unterschiedliche Änderungsfrequenzen und/oder Wiederholungsfrequenzen und/oder Datenkategorien der Elementanteile handelt.

3. Verfahren nach einem der Ansprüche 1 oder 2, **dadurch gekennzeichnet, dass** bei elementadressierbaren Datenströmen (3) eine Elementadresse durch die Anzahl der in dem Datenstrom vor dem adressierten Datenstromelement ausgegebenen Datenstromelemente definiert ist.

4. Verfahren nach Anspruch 1 bis 3, **dadurch gekennzeichnet, dass** einem mindestens zwei Datenstromelemente unterschiedlicher Länge aufweisenden Datenstrom, wobei ein Datenstromelement als Abfolge von Elementanteilen gleicher Länge angesehen wird, ein Indexdatenstrom zugeordnet wird, wobei der Indexdatenstrom (3) Indexdaten (4) aufweist und die Indexdaten (4) des Indexdatenstromes (3) untereinander die gleiche Länge aufweisen, wobei in einem Indexdatum (4) die Anzahl der Elementanteile der in dem Datenstrom vor dem zugeordneten Datenstromelement ausgegebenen Datenstromanteilen enthalten ist, wobei die Reihenfolge der Indexdaten (4) der Reihenfolge der zugewiesenen Datenstromelemente (2) im Datenstrom (1) entspricht und wobei über die Zuordnung des Indexdatenstromes die Elementadressierung des Datenstroms (1) gegeben ist.

5. Verfahren nach einem der Ansprüche 1 bis 4, **dadurch gekennzeichnet, dass** die maximal verfügbare Anzahl an Datenstromelementen (2) eines Datenstromes (1) durch ein Datenintervall des Datenstromes (1) vorgegeben ist, dass innerhalb eines Datenintervalls angeordnete adressierbare Datenstromelemente eines Datenstromes auf innerhalb eines Datenintervalls angeordnete Datenstromelemente des adressierten Datenstromes verweisen.

6. Verfahren nach einem der Ansprüche 1 bis 5, **dadurch gekennzeichnet, dass** zu einem Datenstrom ein weiterer Datenstrom mit gleicher Anzahl und Reihenfolge der Datenstromelement erzeugt wird, wobei der weitere Datenstrom gegenüber dem ursprünglichen Datenstrom veränderte, von den Datenstromelementen des ursprünglichen Datenstrom abhängige Datenstromelemente aufweist, wobei die Datenstromelemente des weiteren Datenstromes über die gleichen Elementadressen wie die entsprechenden Datenstromelemente des ursprünglichen Datenstroms adressierbar sind.

7. Verfahren nach einem der Ansprüche 1 bis 6, **dadurch gekennzeichnet, dass** durch den Erhalt der Abfolge der Datenstromelemente des Eingangsdatenstromes in dem Ausgabestrom der in den ursprünglichen Eingangsdatenstrom adressierende Datenstrom auch bei rekursiver Anwendung des Verfahrens auf die zugehörigen Datenstromelemente des Ausgabedatenstromes verweist.

8. Verfahren nach einem der Ansprüche 1 bis 7, **dadurch gekennzeichnet, dass** die Datenströme in voneinander unabhängigen Blöcken weiterverarbeitet werden und dass die Weiterverarbeitung sowohl räumlich als auch zeitlich getrennt erfolgt.

9. Verfahren nach Anspruch 1 bis 8, **dadurch gekennzeichnet, dass** zur Übereinstimmungsprüfung mindestens einer Anteilgruppe (5) mindestens eine Abbildung, insbesondere ein Hashwert (6) zugeordnet wird, dass dieser Hashwert (6) ein aus der Anteilgruppe (5) berechneter nummerischer Hashwert (6) ist, dass zu gleichen Anteilgruppen (5) gleiche Hashwerte (6) berechnet werden, dass ein zusammenhängender Speicherbereich als Abfolge aus Speicherplätzen zur Speicherung von Elementadressen vorgehalten wird, wobei jeder Speicherplatz eine Elementadresse enthalten kann oder als nicht belegt markiert ist, dass einer Anteilgruppe (5) über den Hashwert (6) ein Speicherplatz (7) zugeordnet wird, dass bei einem als nicht belegt markierten Speicherplatz die Anteilgruppe (5) als unerkannt angesehen wird und in dem zugeordneten Nebendatenstrom ausgegeben wird, dass in dem Speicherplatz die Adresse der Anteilgruppe im Nebendatenstrom abgelegt wird, dass diese Adresse als Ergebnis der Prüfung der Anteilgruppe im weiteren verwendet wird.

10. Verfahren nach Anspruch 9, **dadurch gekennzeichnet, dass** bei einem als belegt markiertem Speicherplatz (7) die durch die im Speicherplatz angegebene Adresse (8) adressierte Anteilgruppe (9) aus dem Nebendatenstrom mit der abzuspeichernden Anteilgruppe (5) auf Übereinstimmung geprüft wird und dass bei Übereinstimmung die im Speicherplatz angegebene Adresse in den Ausgabestrom ausgegeben wird.

11. Verfahren nach einem der Ansprüche 9 oder 10, **dadurch gekennzeichnet, dass** bei Nichtübereinstimmung (10) der zu überprüfenden Anteilgruppe (5) mit der durch den belegten Speicherplatz (7) adressierten Anteilgruppe (9), der abzuspeichernden Anteilgruppe (5) durch den Hashwert (6) ein alternativer Speicherplatz (11) zugeordnet wird, dass für diesen alternativen Speicherplatz (11) eine weitere Übereinstimmungsprüfung (14) durchgeführt wird und dass bei weiteren Nichtübereinstimmungen weitere alternative Speicherplätze zugeordnet werden.

12. Verfahren nach einem der Ansprüche 9 oder 10, **dadurch gekennzeichnet, dass** bei Nichtübereinstimmung (14) der Anteilgruppe (5) mit der durch den belegten Speicherplatz (11) adressierten Anteilgruppe (13), die Adresse der Anteilgruppe (5) im Nebendatenstrom in den Speicherplatz abgelegt wird, wobei der ursprüngliche Inhalt des Speicherplatzes (11) ersetzt wird (15).

13. Verfahren nach einem der Ansprüche 9 bis 12, **dadurch gekennzeichnet, dass** bei wiederkehrender Belegung der Speicherplätze (7, 11) der Speicherplatz mit der kleinsten Adresse als nicht belegt definiert wird und dass bei einer im Speicherplatz enthaltenen, außerhalb des verfügbaren Nebendatenstromintervalls gelegenen Adresse der Speicherplatz als unbelegt definiert wird.

14. Verfahren nach einem der Ansprüche 1 bis 13, **dadurch gekennzeichnet, dass** zur Übereinstimmungsprüfung eine mehrstufige Übereinstimmungsprüfung angewendet wird, wobei in einer ersten Stufe der Wert eines Datenstromelementes erfasst wird, wobei der Wert des Datenstromelementes aus Elementanteilen besteht, dass dem aus Elementaranteilen bestehenden Wert des Datenstromelementes eine Adresse in einem ersten Nebendatenstrom zugeordnet wird und dass in einer zweiten Stufe dieser Adresse mindestens eine Gruppe der Adressen der Elementanteilen in einem weiteren Nebendatenstromes zugeordnet wird, wobei dieser weitere Nebendatenstrom Adressen der Elementanteile enthält und somit als Index in dem ersten Datenstrom fungiert.

15. Verfahren nach einem der Ansprüche 1 bis 14, **dadurch gekennzeichnet, dass** ein Datenstromelemente aufweisender Datenstrom erfasst wird, wobei die Datenstromelemente aus voneinander verschiedenen Elementanteilen aufgebaut sind, dass die Elementanteile aller Datenstromelemente in Kategorien sortiert werden können, dass die mit einem Elementanteil einer ersten Kategorie zusammen in einem Datenstromelement vorkommenden Elementanteile weiterer Kategorien auf Übereinstimmung geprüft werden und dass die mit den Elementanteilen der ersten Kategorie in weiteren Datenstromelementen zusammen vorkommenden Elementanteile in einem Nebendatenstrom ausgegeben werden.

16. Verfahren nach einem der Ansprüche 1 bis 15, **dadurch gekennzeichnet, dass** ein Datenstromelement aus Elementanteilen besteht, dass sich die Elementanteile eines Datenstromelementes in mindestens zwei Kategorien sortieren lassen, dass jedem Elementanteil einer ersten Kategorie mindestens ein Elementanteil einer zweiten Kategorie zugeordnet ist, dass die Zuordnung der Elementanteile eines Datenstromelementes auf Übereinstimmung mit der Zuordnung der Elementanteile der weiteren Datenstromelemente überprüft wird und dass der Zuordnung der Elementanteile eine Adresse in einem Nebendatenstrom zugeordnet wird.

17. Verfahren nach einem der Ansprüche 1 bis 16, **dadurch gekennzeichnet**, das Verfahrensschritte innerhalb einer Stufe oder in kaskadierenden Stufen, und damit zeitlich und räumlich getrennt, angewendet werden.

## Claims

1. Method for reducing the computing time of a data processing device during the processing of data of a data stream, consisting of the steps,
that
an input data stream (1) consisting of data stream elements (2) is detected sequentially by at least one data processing unit,
that at least one element-addressable data stream (3) is generated from the input data stream (1) in order to enable access to individual data stream elements,
that each data stream element (2) of the input data stream (1) is divided up into element components,
that the element components are grouped into component groups according to different categories,
that element components of at least one component group are checked for coincidence with already detected element components of the corresponding component group,
wherein an element-addressable secondary data stream (3) is generated from the element components of the component group not coinciding with already detected element components of the at least one component group, which enables the calculation of the position of an element component of the component group in the secondary data stream, wherein the element component of the component group is subsequently defined via its address referring to the secondary data stream (3), that an output data stream is generated,
wherein the output data stream includes the addresses of the element components of the at least one component group in the secondary data stream (3),
wherein the sequence of the data stream elements of the output data stream corresponds to the sequence of the data stream elements (2) of the input data stream (1), and
wherein element components of the component group that are identified as coinciding with the already detected element components of the at least one component group are not stored in the secondary data stream again.

2. Method according to Claim 1, **characterized in that** the categories are different change frequencies and/or repetition frequencies and/or data categories of the element components.

3. Method according to either of Claims 1 or 2, **characterized in that**, in the case of element-addressable data streams (3), an element address is defined by the number of data stream elements output in the data stream prior to the addressed data stream element.

4. Method according to Claims 1 to 3, **characterized in that** a data stream having at least two data stream elements of different lengths, wherein a data stream element is regarded as a sequence of element components of equal length, is assigned an index data stream, wherein the index data stream (3) has index data (4) and the index data (4) of the index data stream (3) being of the same length among each other, wherein an index data (4) contains the number of element components of the data stream components output in the data stream prior to the assigned data stream element, wherein the sequence of the index data (4) corresponds to the sequence of the assigned data stream elements (2) in the data stream (1) and wherein the element addressing of the data stream (1) is given by the assignment of the index data stream.

5. Method according to any one of Claims 1 to 4, **characterized in that** the maximum available number of data stream elements (2) of a data stream (1) is specified by a data interval of the data stream (1), that addressable data stream elements of a data stream that are arranged within a data interval refer to data stream elements of the addressed data stream arranged within a data interval.

6. Method according to any one of Claims 1 to 5, **characterized in that** a further data stream with the same number and sequence of data stream elements is generated for a data stream, wherein the further data stream comprises data stream elements that are modified with respect to the original data stream and dependent on the data stream elements of the original data stream, wherein the data stream elements of the further data stream are addressable via the same element addresses as the corresponding data stream elements of the original data stream.

7. Method according to any one of Claims 1 to 6, **characterized in that**, by retaining the sequence of the data stream elements of the input data stream in the output stream, the data stream addressing the original input data stream also refers to the associated data stream elements of the output data stream during recursive application of the method.

8. Method according to any one of Claims 1 to 7, **characterized in that** the data streams are further processed in mutually independent blocks and **in that** the further processing takes place in both a spatially and temporally separated manner.

9. Method according to Claims 1 to 8, **characterized in that** in order to carry out a coincidence check, at least one component group (5) is assigned at least one mapping, in particular a hash value (6), that this hash value (6) is a numerical hash value (6) calculated from the component group (5), that equal hash values (6) are calculated for identical component groups (5), that a contiguous memory range is reserved as a sequence of memory locations for storing element addresses, wherein each memory location can contain an element address or is marked as unoccupied, that a component group (5) is allocated a memory location (7) via the hash value (6), that in the case of a memory location marked as unoccupied, the component group (5) is regarded as unidentified and is output in the associated secondary data stream, that the address of the component group in the secondary data stream is stored in the memory location, that this address is subsequently used as a result of the check of the component group.

10. Method according to Claim 9, **characterized in that**, in the case of a memory location (7) marked as occupied, the component group (9) from the secondary data stream addressed by the address (8) specified in the memory location is checked for coincidence with the component group (5) to be stored and that in case of coincidence, the address specified in the memory location is output to the output stream.

11. Method according to either of Claims 9 or 10, **characterized in that**, if in case of non-coincidence (10) between the component group (5) to be checked and the component group (9) addressed by the occupied memory location (7), the component group (5) to be stored is allocated an alternative memory location (11) by means of the hash value (6), that a further coincidence check (14) is carried out for this alternative memory location (11) and that additional alternative memory locations are allocated in case of further non-coincidences.

12. Method according to either of claims 9 or 10, **characterized in that**, in case of non-coincidence (14) between the component group (5) and the component group (13) addressed by the occupied memory location (11), the address of the component group (5) in the secondary data stream is stored in the memory location, wherein the original content of the memory location (11) is replaced (15).

13. Method according to any one of Claims 9 to 12, **characterized in that**, in the case of recurring allocation of the memory locations (7, 11), the memory location with the lowest address is defined as unoccupied and that, in the case of an address contained in the memory location and located outside of the available secondary data stream interval, the memory location is defined as unoccupied.

14. Method according to any one of Claims 1 to 13, **characterized in that** a multi-stage coincidence check is applied for coincidence checking, wherein in a first stage the value of a data stream element is detected, wherein the value of the data stream element consists of element components, that the value of the data stream element consisting of element components is allocated an address in a first secondary data stream and that in a second stage at least one group of the addresses of the element components in a further secondary data stream is assigned to this address, wherein this further secondary data stream contains addresses of the element components and thus acts as an index into the first data stream.

15. Method according to any one of Claims 1 to 14, **characterized in that** a data stream comprising data stream elements is detected, wherein the data stream elements are composed from element components different from each other, that the element components of all data stream elements can be sorted into categories, that the element components of a first category occurring together with an element component of further categories in a data stream element are checked for coincidence and that the element components occurring together with the element components of the first category in further data stream elements are output in a secondary data stream.

16. Method according to any one of Claims 1 to 15, **characterized in that** a data stream element consists of element components, that the element components of a data stream element can be sorted into at least two categories, that each element component of a first category is assigned at least one element component of a second category, that the assignment of the element components of a data stream element is checked for a match with the assignment of the element components of the further data stream elements and that an address in a secondary data stream is allocated to the assignment of the element components.

17. Method according to any one of Claims 1 to 16, **characterized in that** method steps are applied within one stage or in cascading stages, and are thus temporally and spatially separated.

## Revendications

1. Procédé de réduction du temps de calcul d'un dispositif de traitement de données lors du traitement de données d'un flux de données comprenant les étapes suivantes :
un flux de données d'entrée constitué d'éléments de flux de données (2) est enregistré séquentiellement par au moins un dispositif de traitement de données ;
au moins un flux de données adressable par élément (3) est généré à partir du flux de données d'entrée (1) afin de permettre l'accès à des éléments de flux de données individuels ;
chaque élément de flux de données (2) du flux de données d'entrée (1) est divisé en parts d'éléments ;
les parts d'éléments sont regroupées en groupes de parts selon des catégories différentes ;
des parts d'éléments d'au moins un groupe de parts sont vérifiées à des fins de conformité avec des parts d'éléments déjà enregistrées du groupe de parts correspondant ;
dans lequel à partir des parts d'éléments du groupe de parts qui ne correspondent pas aux parts d'éléments déjà enregistrées d'au moins un groupe de parts d'éléments, un flux de données secondaire adressable par élément est généré, qui permet le calcul de la position d'une part d'élément du groupe de parts dans le flux de données secondaire (3), dans lequel, par la suite, la part d'élément du groupe de parts est définie via son adresse faisant référence au flux de données secondaire (3), un flux de données de sortie est généré,
dans lequel dans le flux de données de sortie sont contenues le adresses des parts d'éléments d'au moins un groupe de parts dans le flux de données secondaire (3),
dans lequel la séquence d'éléments de flux de données du flux de données de sortie correspond à la séquence d'éléments de flux de données (2) du flux de données d'entrée (1) et
dans lequel une des au moins une part d'élément reconnue comme correspondant à au moins un groupe de parts n'est pas de nouveau mémorisée dans le flux de données secondaire avec les parts d'éléments déjà enregistrées.

2. Procédé selon la revendication 1, **caractérisé en ce que** les catégories sont des fréquences de variation et/ou des fréquences de répétition et/ou des catégories de données différentes des parts d'éléments.

3. Procédé selon une des revendications 1 ou 2, **caractérisé en ce que** dans les flux de données adressables par élément (3), une adresse d'élément est définie par le nombre d'éléments de flux de données délivrés dans le flux de données avant l'élément de flux de données adressé.

4. Procédé selon la revendication 1 à 3, **caractérisé en ce qu'**un flux de données d'index est attribué à un flux de données comportant au moins deux éléments de flux de données de longueur différente, dans lequel un élément de flux de données est considéré comme une séquence de parts d'élément de même longueur, dans lequel le flux de données d'index (3) présente des données d'index (4) et les données d'index (4) du flux de données d'index (3) ont la même longueur entre elles, dans lequel une donnée d'index (4) contient le nombre de parts d'éléments des parts de flux de données émises dans le flux de données avant l'élément de flux de données associé, dans lequel l'ordre des données d'index (4) correspond à l'ordre des éléments de flux de données attribués (2) dans le flux de données (1) et dans lequel l'adressage des éléments du flux de données (1) est donné via l'affectation du flux de données d'index.

5. Procédé selon une des revendications 1 à 4, **caractérisé en ce que** le nombre maximal disponible d'éléments de flux de données (2) d'un flux de données (1) est prédéterminé par un intervalle de données du flux de données (1), de telle sorte que les éléments de flux de données adressables d'un flux de données disposés dans un intervalle de données se réfèrent à éléments de flux de données du flux de données adressé disposés dans un intervalle de données.

6. Procédé selon une des revendications 1 à 5, **caractérisé en ce qu'**un autre flux de données avec le même nombre et le même ordre d'éléments de flux de données est généré pour un flux de données, dans lequel l'autre flux de données présente des éléments de flux de données dépendants des éléments de flux de données du flux de données d'origine, ayant varié par rapport au flux de données d'origine, dans lequel les éléments de flux de données de l'autre flux de données peuvent en outre être adressés via les mêmes adresses d'élément que les éléments de flux de données correspondants du flux de données d'origine.

7. Procédé selon une des revendications 1 à 6, **caractérisé en ce que**, en conservant la séquence des éléments de flux de données du flux de données d'entrée dans le flux de sortie, le flux de données adressant le flux de données d'entrée d'origine fait également référence aux éléments de flux de données associé du flux de données de sortie lorsque le procédé est appliqué de manière récursive.

8. Procédé selon une des revendications 1 à 7, **caractérisé en ce que** les flux de données sont traités ultérieurement en blocs indépendants les uns des autres et que le traitement ultérieur s'effectue séparément aussi bien spatialement que temporellement.

9. Procédé selon les revendications 1 à 8, **caractérisé en ce que** pour la vérification de conformité d'au moins un groupe de parts (5), au moins une illustration, en particulier une valeur de hachage (6) est attribuée, que cette valeur de hachage (6) est une valeur de hachage numérique (6) calculée à partir d'un groupe de parts (5), que des valeurs de hachage identiques (6) sont calculées pour des groupes de parts identiques (5), qu'une zone de mémoire contiguë est conservée comme une séquence d'emplacements de mémoire pour mémoriser les adresses d'éléments, dans lequel chaque emplacement de mémoire peut contenir une adresse d'élément ou est marqué comme inutilisé, qu'un espace de mémorisation (7) est attribué à un groupe de parts (5) via la valeur de hachage (6), que si un espace de mémorisation est marqué comme inutilisé, le groupe de parts (5) est considéré comme non reconnu et est émis dans le flux de données secondaire associé, que dans l'emplacement de mémorisation est mémorisée l'adresse du groupe de parts dans le flux de données secondaire afin que cette adresse soit utilisée à l'avenir comme résultat de la vérification du groupe de parts.

10. Procédé selon la revendication 9, **caractérisé en ce que**, dans le cas d'un emplacement de mémoire (7) marqué comme occupé, le groupe de parts (9) adressé par l'adresse (8) spécifiée dans l'emplacement de mémoire à partir du flux de données secondaire est vérifié pour s'assurer de sa conformité avec le groupe de parts (5) à mémoriser et s'il y a correspondance, l'adresse spécifiée dans l'emplacement de mémoire est émise dans le flux de sortie.

11. Procédé selon une des revendications 9 ou 10, **caractérisé en ce que** s'il existe une discordance (10) entre le groupe de parts (5) à vérifier et le groupe de parts (9) adressé par l'emplacement de mémoire occupé (7), le groupe de parts (5) à mémoriser est associé par la valeur de hachage (6) à un emplacement de mémoire alternatif (11), qu'une autre vérification de conformité (14) est effectuée pour cet emplacement de mémoire alternatif (11) et qu'en cas de discordances supplémentaires, d'autres emplacements de mémoire alternatifs sont attribués.

12. Procédé selon une des revendications 9 ou 10, **caractérisé en ce que** s'il existe une discordance (14) entre le groupe de parts (5) et le groupe de parts (13) adressé par l'emplacement de mémoire occupé (11), l'adresse du groupe de parts (5) dans le flux de données secondaire est mémorisée dans l'emplacement de mémoire, en remplaçant le contenu d'origine de l'emplacement de mémoire (11) (15).

13. Procédé selon une des revendications 9 à 12, **caractérisé en ce que** lorsque les emplacements de mémoire (7, 11) sont occupés de manière répétée, l'emplacement de mémoire avec la plus petite adresse est défini comme inoccupé et que lorsqu'un intervalle de flux de données secondaire est contenu dans l'emplacement de mémoire et se trouve en dehors de l'intervalle de flux de données secondaire disponible, l'adresse située à l'emplacement de mémoire est définie comme inutilisée.

14. Procédé selon une des revendications 1 à 13, **caractérisé en ce qu'**une vérification de conformité en plusieurs étapes est utilisée pour la vérification de conformité, dans lequel dans une première étape la valeur d'un élément de flux de données est enregistrée, dans lequel la valeur de l'élément de flux de données est constituée de parts d'éléments, que la valeur de l'élément de flux de données constituée de parts d'éléments est associée à une adresse dans un premier flux de données secondaire et que dans une deuxième étape cette adresse est associée à au moins un groupe d'adresses des parts d'éléments dans un flux de données secondaire supplémentaire, dans lequel ce flux de données secondaire supplémentaire contient les parts d'éléments et fonctionne donc comme index dans le premier flux de données.

15. Procédé selon une des revendications 1 à 14, **caractérisé en ce qu'**un flux de données comprenant dans lequel les éléments de flux de données sont constitués de parts d'éléments mutuellement différentes, que les parts d'éléments de tous les éléments de flux de données peuvent être triées en catégories, que les parts d'éléments d'autres catégories apparaissant dans un élément de flux de données sont vérifiées à des fins de conformité avec une part d'élément d'une première catégorie et que les parts d'éléments apparaissant dans des éléments de flux de données supplémentaires avec les parts d'éléments de la première catégorie sont émises dans un flux de données secondaire.

16. Procédé selon une des revendications 1 à 15, **caractérisé en ce qu'**un élément de flux de données est constitué de parts d'éléments, que les parts d'éléments d'un élément de flux de données peuvent être triées en au moins deux catégories, que chaque part d'élément d'une première catégorie est affectée à au moins une part d'élément d'une deuxième catégorie, que l'affectation des parts d'élément d'un élément de flux de données est vérifiée pour vérifier la conformité avec l'affectation des parts d'élément des autres éléments de flux de données et que l'affectation des parts d'élément se voit attribuer une adresse dans un flux de données secondaire.

17. Procédé selon une des revendications 1 à 16, **caractérisé en ce que** les étapes du procédé sont mises en œuvre au cours d'une étape ou par étapes en cascade et ainsi séparées dans le temps et dans l'espace.
